# EUROPÄISCHE PATENTSCHRIFT

(11) **EP 2 181 875 B1**
(45) Veröffentlichungstag und Bekanntmachung des Hinweises auf die Patenterteilung: **12.02.2014**
(21) Anmeldenummer: 09174575.2
(22) Anmeldetag: 30.10.2009
(51) Int. Cl.: B60J 1/02, B29C 45/16, B32B 17/10

(54) **Verfahren zum Spritzgießen von thermoplastischen Polymermassen mit kontinuierlichen Eigenschaftsübergängen**
Method for injection moulding thermoplastic polymer masses with constant attribute transitions
Procédé de moulage par injection de masses polymères thermoplastiques ayant des transitions de propriétés continues

(30) Priorität: 03.11.2008 DE 102008043393
(43) Veröffentlichungstag der Anmeldung: 05.05.2010
(73) Patentinhaber: Kuraray Europe GmbH, 65795 Hattersheim (DE)
(72) Erfinder: Stenzel, Holger, 53773 Hennef (DE); Ridder, Helmut, 33100 Paderborn (DE); Schnieder, Joachim, 33100 Paderborn (DE)
(74) Vertreter: Kisters, Michael Marcus

(56) Entgegenhaltungen:
- EP-A1- 1 876 009
- WO-A1-2005/002826
- DE-A1- 3 247 000

## Beschreibung

Die Erfindung betrifft ein Verfahren zur Herstellung von Formteilen wie Folien mit mindestens einem kontinuierlichen Übergang von physikalischen und/oder chemischen Eigenschaften durch Spritzgießen einer thermoplastischen Polymermasse aus mindestens zwei Schmelzeströmen.

### Technisches Gebiet

Verfahren zum Spritzgießen von thermoplastischen Massen mit unterschiedlichen Farben oder sonstigen Eigenschaften d.h. mit einem Eigenschaftsübergang im Formkörper sind bekannt. So beschreiben US 5,989,003, US 3,061,879, US 3,947,177 oder WO 82/1160 Spritzgussverfahren, bei denen Schmelzeströme unterschiedlicher Farbe oder Zusammensetzung in zeitlicher oder räumlich unterschiedlicher Anordnung in das Spritzgusswerkzeug eingespritzt werden und so zu Formkörpern mit Bereichen unterschiedlicher Färbung oder Zusammensetzung führen. Die hier beschriebenen Verfahren ermöglichen aber nur die Herstellung von Formkörpern mit einem diskontinuierlichen d.h. abrupten Eigenschaftsübergang wie z.B. von einer Färbung zu einer anderen.

Aus einem anderen technischen Gebiet, der kontinuierlichen Folienextrusion ist es bekannt, mehrere polymere Schmelzeströme unterschiedlicher Färbung in entsprechend ausgelegten Werkzeugen so zusammen zu führen, das in einem ausgewählten Bereich der Folie ein kontinuierlicher Übergang von einer Farbe zu einer anderen erhalten wird.

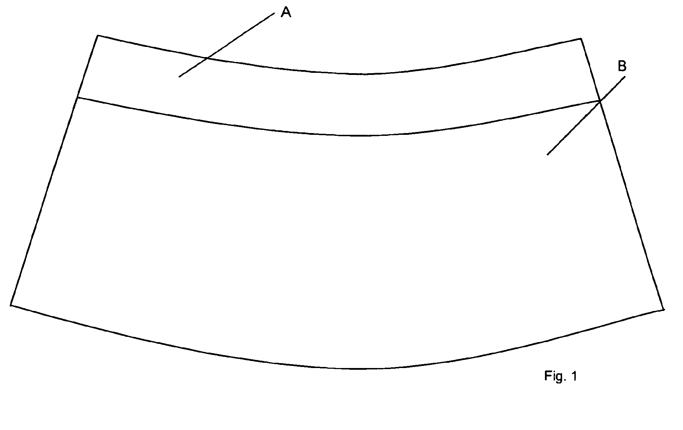

So werden Zwischenschichtfolien für Kraftfahrzeugwindschutzscheiben mit einem sog. Farbband, d.h. mit gefärbten und ungefärbten Teilbereichen durch kontinuierliche Extrusionsverfahren hergestellt. Fig. 1 zeigt eine solche Folie, wobei (A) einen gefärbten und (B) einen ungefärbten Teilbereich bezeichnet. Üblicherweise weist der obere Teil der Folie einen ca. 5-90 cm, bevorzugt 10 - 25 cm breiten gefärbten Teilbereich auf, wobei der Rest der Folie andersfarbig oder ungefärbt ist.

Alternativ zur kontinuierlichen Folienextrusion wird in DE 10 2007 021103 A1 ein Verfahren beschrieben, um mittels der Spritzgieß- bzw. Spritzprägetechnik direkt ein Foliensheet herzustellen. Dieses Sheet kann in seinen Außenabmessungen der Geometrie der Windschutzscheibe exakt oder ggf. mit einem vordefinierten Überstand angepasst und somit ohne weitere Nachbehandlung direkt zwischen zwei Glasscheiben laminiert werden.

WO 2008/24805A1 und FR 2750075 beschreiben anders gelagerte Spritzgussverfahren, bei dem zur Herstellung von Verbundglaslaminaten eine thermoplastische Polymermasse direkt zwischen zwei Glasscheiben gespritzt wird.

Bei der Herstellung von Windschutzscheiben mit einem Farbband ist ein abrupter Farbübergang nicht gewünscht, sondern es wird auf einen kontinuierlichen Farbübergang Wert gelegt. Dies ist mit den beschriebenen Spritzgussverfahren nicht durchführbar.

Weiterhin können mit diesem Verfahren nur fertige Glaslaminate hergestellt werden, jedoch nicht einzelne Folien, die später weiterverarbeitet werden.

Auch für andere Anwendungen wäre die Herstellung von Formteilen mit kontinuierlichen Eigenschaftsänderungen mittels Spritzguss vorteilhaft. So könnten durch geeignete Wahl der mechanischen Eigenschaften Hart/Weichübergänge z.B. für Dämpfungselemente erzeugt werden, ohne das eine abrupte Änderung der mechanischen Eigenschaften zu Bruchstellen führt.

Des Weiteren können Schwimmkörper mit kontinuierlich veränderter Dichteverteilung hergestellt werden. Für die Herstellung von Bauteilen oder Formkörpern können kontinuierliche Farbübergänge zur Verdeckung von Verbindungsstellen (Schweißnähte, Nietverbindungen genutzt werden. Diese Farbübergänge existieren zurzeit nur diskontinuierlich. Im Bereich der Heckleuchtenfertigung können Lichtscheiben kontinuierliche Farbübergänge aufweisen um lichttechnische Effekte zu erzeugen. Ähnliches gilt für die Konsumgüterindustrie wie zum Beispiel Licht leitende Abdeckungen von Autoradios, Stereoanlagen usw. Zusätzlich können diese Übergänge für TV-Abdeckungen für die kontinuierlich veränderte Transmission der Hintergrundbeleuchtungen genutzt werden (Ambi-Light). Weitere Vorteile sind für den Einsatz von Lichtwellenleitern und Kunststofflichtleitstäben die für die Automobilindustrie (Frontscheinwerfer, Blinker, Heckleuchten) eingesetzt werden zu erwarten, da so Farbübergänge in den Lichtleiterbauteilen erzeugt werden können, die bisher nicht realisierbar waren.

Aufgabe der vorliegenden Erfindung war es daher, ein Spritzgussverfahren für Formteile bereitzustellen, mit dem kontinuierliche Eigenschaftsübergänge für Formteile ohne erkennbare Stufen ermöglicht werden.

Gegenstand der vorliegenden Erfindung ist daher ein Verfahren zur Herstellung von Formteilen mit mindestens einem kontinuierlichen Übergang von physikalischen und/oder chemischen Eigenschaften durch Spritzgießen einer Mischung von thermoplastischen Polymermassen mit jeweils unterschiedlichen physikalischen und/oder chemischen Eigenschaften durch gegenläufige Veränderung der jeweiligen Anteile der mindestens zwei Schmelzeströme wobei die mindestens zwei Schmelzeströme vor der Spritzgußform in einem statischen oder dynamischen Mischer zusammengeführt und vermischt werden.

Die folgenden Ausführungen für das Spritzgießen gelten analog für das Spritzprägen. Des Weiteren gelten die Ausführungen für die Herstellung kontinuierlicher Farbübergänge analog für die kontinuierliche Änderung jeder physikalischen und/oder chemischen Eigenschaft des Formkörpers, die durch Verwendung von mindestens zwei Schmelzeströmen, enthaltend z.B. jeweils unterschiedliche Polymere, Weichmacher, Farben, Additive und/oder Füll- und Verstärkungsstoffe resultieren.

Als Additiv werden alle Zuschlagsstoffe bezeichnet, die einen Anteil von weniger als 10 Gew.% des betreffenden Schmelzestroms einnehmen. Hierunter fallen auch organische oder anorganische Farbpigmente.

Als Füll- und Verstärkungsstoffe werden alle Zuschlagsstoffe bezeichnet, die einen Anteil von mehr als 10 Gew.-% des betreffenden Schmelzestroms einnehmen. Die können z.B. sein: Glasfasern, Glaskugeln, Talkum, elektrisch leitfähige Materialien (Russ, niedrig schmelzende Metalllegierungen, Metallfasern).

Als kontinuierlicher Eigenschaftsübergang wird im Rahmen der vorliegenden Erfindung ein Eigenschaftsübergang bezeichnet, der in mindestens 0,5 %, bevorzugt 1 %, insbesondere 5 % und ganz besonders bevorzugt 10 %, 20 % oder 50 % der Länge des Formteils auftritt. Im Extremfall tritt der Eigenschaftsübergang über der ganzen Länge des Formteils auf.

In einer möglichen Ausführungsform des erfindungsgemäßen Verfahrens orientiert man sich an einer Variante des herkömmlichen Spritzgießverfahrens, dem Zweikomponenten-Spritzgießverfahren, kurz 2K-Verfahren genannt.

Beim 2K-Verfahren gibt es verschiedene Arten des Spritzgießens, denen gemeinsam ist, dass Spritzgießmaschinen mit zwei Spritzeinheiten, aber nur einer Schließeinheit benötigt werden. Die Spritzeinheiten müssen harmonierend arbeiten, aber immer unabhängig voneinander steuerbar sein. Die Komponenten können durch eine Spezialdüse eingespritzt oder auch an verschiedenen Stellen ins Werkzeug eingebracht werden.

Bei der Extrusion von Zwischenschichtfolien für Windschutzscheiben wird das Farbband zurzeit durch Coextrusion, d.h. durch Auf- oder Einextrudieren einer farbigen Schicht auf eine oder zwischen zwei transparenten Schichten realisiert. Von besonderer Bedeutung ist dabei der optische Eindruck des Übergangs zwischen den farbigen und den transparenten Bereich. Um ein optisch ansprechendes Farbband zu generieren, ist der Übergang zwischen transparentem und farbigem Bereich nicht scharf abgegrenzt, sondern verläuft fließend (kontinuierlich) ohne sichtbare Abstufungen. Man spricht daher auch von Fade-Out Bereich.

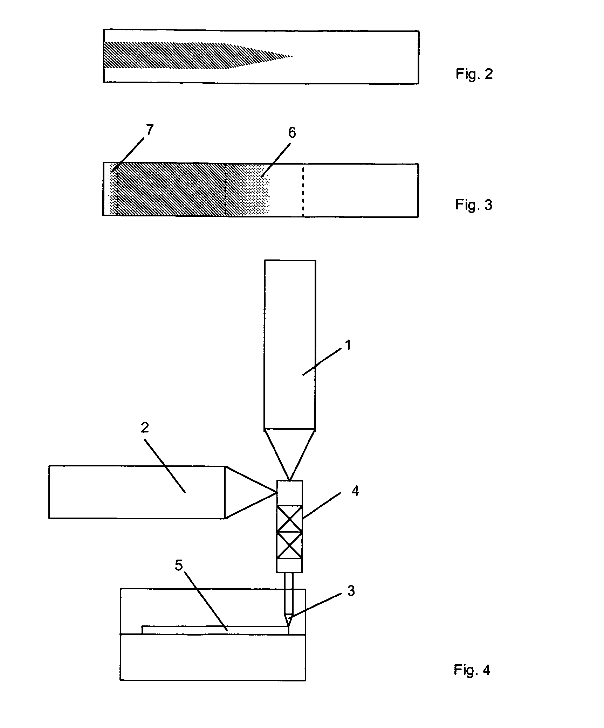

Bei der Coextrusion von Folien nach dem Stand der Technik wird das in der Weise realisiert, dass der die farbige Schmelze verteilende Einsatz geometrisch derart gestaltet ist, dass ein kontinuierlicher Schichtdickenverlauf der Farbschicht von 0 auf die erforderliche konstante Sollfarbschichtdicke auf einer durch den Einsatz vorgegebenen Länge erfolgt. Fig. 2 zeigt ein mögliches Dickenprofil einer solchen Folie in Seitenansicht. Dabei ist der Einfärbegrad der Farbschicht konstant und das Fade-Out (entsprechende Aufsicht in Fig. 3) wird durch variable Schichtdicke der Farbschicht realisiert. Durch unterschiedlich geformte Farb-Verteilereinsätze im Coextrusionswerkzeug kann der Farbverlauf verändert werden.

Die Anwendung dieses Verfahrens ist im Spritzgieß- bzw. Spritzprägeprozess bisher nicht möglich, da auf Dicke 0 auslaufende Schichten mit Verfahren gemäß dem Stand der Technik nicht realisiert werden können, auch wenn man optimierte Fließfähigkeit des verwendeten Rohstoffs und temperierte Werkzeugkavitäten berücksichtigt. Man erhält beim 2K-Spritzgießen gemäß dem Stand der Technik eine mehr oder weniger scharfe, d.h. diskontinuierliche Abgrenzung der Komponenten voneinander. Eine optisch scharfe Trennung von transparentem Bereich und Farbband ist aber bei Folien für Fahrzeugscheiben nicht gewünscht.

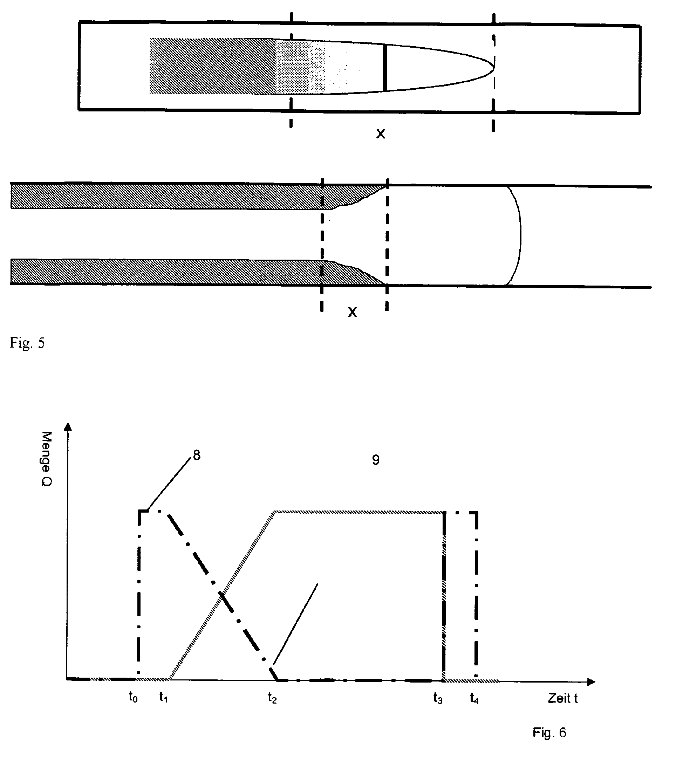

Das erfindungsgemäße Verfahren sieht daher eine andere Vorgehensweise vor: Der Farbübergang wird realisiert, indem man im Fade-Out Bereich kontinuierlich den Einfärbegrad der eingespritzten Masse erhöht, während die Farbschichtdicke konstant bleibt. Fig. 3 zeigt die Aufsicht eines solchen Farbverlaufs, wobei (6) den Fade-Out Bereich und (7) einen diskontinuierlichen Farbübergang von Farbig zu Farblos bezeichnet. Der Bereich zwischen (7) und (6) ist durch eine konstante Farbtiefe gekennzeichnet und wird häufig als Darkplateau bezeichnet. Die Figuren 5a und b zeigen mögliche Dickenprofile von erfindungsgemäß hergestellten Folien als Seitenansicht.

Im erfindungsgemäßen Verfahren kann der kontinuierliche Übergang der physikalischen und/oder chemischen Eigenschaften des Formkörpers durch Mischung von mindestens zwei Schmelzeströmen mit jeweils unterschiedlichen chemischen und/oder physikalischen Eigenschaften erzeugt werden. Die Mischung der mindestens zwei Schmelzeströme erfolgt durch Zusammenführen und Vermischen der Schmelzeströme vor der Spritzgussform in einem statischen oder dynamischen Mischer.

Der oder die Eigenschaftsübergänge, insbesondere Farbübergänge im Formkörper können erreicht werden, indem der Anteil eines (z.B. des eingefärbten) Schmelzestroms erhöht und der Anteil eines anderen (z.B. des farblosen) Schmelzestroms hierzu gegenläufig verringert wird. Bevorzugt erfolgen die Veränderungen der Anteile kontinuierlich.

In einer weiteren Verfahrensvariante kann der kontinuierliche Übergang der physikalischen und/oder chemischen Eigenschaften des Formkörpers durch eine gegenläufige Veränderung der Dicke von Schichten von mindestens zwei Schmelzeströmen mit jeweils unterschiedlichen chemischen und/oder physikalischen Eigenschaften im Formkörper erzeugt werden.

Hierbei wird zunächst durch einen ersten Schmelzestrom eine Schicht in der Spritzgussform erzeugt. Dann wird der Anteil des ersten Schmelzestroms zurückgenommen und im Gegenzug der Anteil eines zweiten Schmelzestroms erhöht. Auch hier erfolgt die Veränderung der Dicke der Schichten bevorzugt kontinuierlich. Hierdurch bildet sich in einem Übergangsbereich ein Mehrschichtsystem aus, das makroskopisch eine Eigenschafts- bzw. Farbmischung der beiden Schichten oder Schmelzeströme aufweist. Figur 5a und b zeigen eine schematische Darstellung eines Querschnitts eines erfindungsgemäß hergestellten Formkörpers, wobei x den Übergangsbereicht darstellt.

Die im erfindungsgemäßen Verfahren eingesetzten Schmelzeströme können jeweils bis auf unterschiedliche Farben, Additive und/oder Füll- und Verstärkungsstoffe die gleiche Zusammensetzung aufweisen. Im einfachsten Fall weisen die Schmelzeströme jeweils bis auf unterschiedliche Farben, Füll- und Verstärkungsstoffe oder Additive die gleiche Zusammensetzung auf und mindestens einer der Schmelzeströme ist farblos.

Mit dem erfindungsgemäßen Verfahren können Formkörper mit einem oder mehreren Eigenschafts- bzw. Farbübergängen hergestellt werden. Bevorzugt weisen die erfindungsgemäß hergestellten Formkörper nur einen kontinuierlichen Eigenschafts- bzw. Farbübergang auf. Zur Herstellung von Folien für Verbundverglasungen weisen diese insbesondere einen kontinuierlichen Farbübergang von einem farbigen zu einem farblosen, d.h. transparenten Bereich auf. Hierzu ist es erforderlich, dass mindestens einer der Schmelzeströme farblos und der andere entsprechend eingefärbt ist.

Der Eigenschafts- bzw. Farbübergang kann vollständig sein, d.h. die Anteile der mindestens zwei Schmelzeströme mit jeweils unterschiedlichen physikalischen und/oder chemischen Eigenschaften werden gegenläufig, insbesondere kontinuierlich, von jeweils 0 % bzw. 100 % an der thermoplastischen Polymermasse auf entsprechend 100 % bzw. 0 % an der thermoplastischen Polymermasse verändert.

Es ist auch möglich, den Eigenschafts- oder Farbübergang nicht vollständig durchzuführen, d.h. die Anteile der Schmelzeströme mit jeweils unterschiedlichen physikalischen und/oder chemischen Eigenschaften betragen auch im Bereich des stärksten Eigenschafts- bzw. Farbunterschieds jeweils komplementär z.B. 10 zu 90, 20 zu 80, 30 zu 70, 40 zu 60 bzw. 50 zu 50 %.

Im Fall der erfindungsgemäßen Herstellung von Folien für Verbundverglasungen kann dies z.B. benutzt werden, um den Schmelzestrom mit dem farbigen Material volumenmäßig möglichst klein zu halten, d.h. einen stark eingefärbten Masterbatch als farbigen Schmelzestrom mit einem farblosen Schmelzestrom einzusetzen. Hierdurch wird die exakte Farbgebung des Farbbandes durch Steuerung des Einspritzvorgangs und nicht durch Abmischung des farbigen Schmelzestroms erreicht.

In einer besonderen Verfahrensvariante besitzen die Schmelzeströme bis auf unterschiedliche Farben oder Additive die gleiche Zusammensetzung, insbesondere ist mindestens einer der Schmelzeströme farblos. In diesem Fall würde im Bereich konstanter Farbtiefe, dem so genannten Darkplateau nur noch konstant eingefärbte Schmelze eingespritzt. Im günstigsten Fall nutzt man die gesamte Foliendicke zur Einfärbung.

Im erfindungsgemäßen Verfahren werden analog zum 2K-Spritzgießen mindestens zwei Spritzeinheiten benutzt. Fig.4 zeigt schematisch eine für das erfindungsgemäße Verfahren geeignete Vorrichtung. In der ersten Plastifiziereinheit (1) wird transparente Schmelze zur Verfügung gestellt, in der zweiten (2) eingefärbte. Der Einfärbegrad wird dabei so eingestellt, dass die Folie anschließend im tief eingefärbten Bereich, dem so genannten Darkplateau genau den Soll-Einfärbegrad bzw. die Soll-Lichttransmission aufweist.

Der Einspritzvorgang für den Farbbandbereich erfolgt dabei über einen Filmanguss (3) an der Oberkante der Windschutzscheibe anzulegenden Folienseite senkrecht zum Verlauf des Farbbandes. Dadurch kann sichergestellt werden, dass die Fließfront in der Kavität parallel zur Folienoberkante verläuft. Die beiden Plastifiziereinheiten sind dabei über ein statisches Mischelement (4) an die Kavität (5) angeschlossen.

Ein möglicher zeitlicher Verlauf des erfindungsgemäßen Einspritzvorgangs ist in Fig. 6 schematisch für kontinuierliche Farbübergänge dargestellt. Beim Beginn des Einspritzvorgangs t₀ wird zunächst nur transparente Schmelze (8) eingespritzt. Ab einem definierten Zeitpunkt t₁ wird zusätzlich farbige Schmelze (9) eingespritzt, die z.B. über den statischen Mischer mit der transparenten Schmelze örtlich homogen vermischt wird. Ab dem Zeitpunkt t₁, wird begonnen, farbige Schmelze einzuspritzen, wobei die Menge an farbiger Schmelze (9) kontinuierlich erhöht und hierzu gegenläufig die Menge an transparenter Schmelze (8) um z.B. den gleichen absoluten Betrag vermindert wird. Dabei kann die Mengenveränderung programmgesteuert erfolgen, um einen vordefinierten Farbverlauf einzustellen.

Ist die Schmelzefront in der Kavität um den Betrag weitergewandert, der der Länge des Fade-Outs (6) entspricht, wird die transparente Schmelze (8) komplett abgeschaltet und es wird nur noch farbige Schmelze (9) eingespritzt (t₂). Da der zurückgelegte Weg der Schmelzefront in der Kavität einer definierten Zeit entspricht, erfolgt die Steuerung der beiden Spritzeinheiten in der Regel zeitgesteuert.

Kurz bevor die Kavität gefüllt ist, kann ohne oder weitgehend ohne Übergang, d.h. diskontinuierlich komplett auf transparente Schmelze (8) zurückgestellt werden, damit der nächste Einspritzvorgang wieder mit transparenter Schmelze (8) beginnen kann.

Das erfindungsgemäße Verfahren kann so durchgeführt werden, dass der Formkörper nach einem abgeschlossenen kontinuierlichen Übergang von physikalischen und/oder chemischen Eigenschaften einen weitgehend diskontinuierlichen Übergang von physikalischen und/oder chemischen Eigenschaften aufweist.

Im Fall des Farbübergangs kann daher einem kontinuierlichen Farbübergang ein diskontinuierlicher oder zumindest weitgehend diskontinuierlicher Farbübergang folgen (s. Fig. 3, Bereich 7).

Mit diskontinuierlichem Eigenschaftsübergang sind solche Übergänge gemeint, die bezogen auf die Länge des Formteils in einem kürzeren Abschnitt als die beschriebenen Abschnitte für kontinuierliche Übergänge auftreten. So ist bei der Herstellung eines Foliensheets an dessen Oberkante ein Fade-Out nicht erwünscht, sondern die Folienkante endet üblicherweise mit einem Darkplateau. Die Umstellung von farbig auf transparent muss daher in möglicher kurzer Zeit erfolgen. Am Beispiel des in Fig. 6 dargestellten Einspritzvorgangs wird dazu die Einspritzung farbiger Masse (9) zu einem definierten Zeitpunkt t₃ gestoppt, während gleichzeitig transparente Schmelze (8) zu 100 % eingespritzt wird. Es entsteht dann ein kurzer, diskontinuierlicher Farbübergang (7 in Fig.3) an der Oberkante des Foliensheets, der jedoch durch den üblicherweise auf der Windschutzscheibe vorhandenen schwarzen Siebdruckrand verdeckt werden kann.

Die Schmelzeströme werden mit unterschiedlichen chemischen und/oder physikalischen Eigenschaften wie z.B. unterschiedlicher Färbung in einem statischen oder dynamischen Mischer zusammengeführt und vermischt. Hierdurch wird eine homogene Mischung ohne Schlieren in das Werkzeug eingespritzt.

Um einen möglichst stufenlosen und kontinuierlichen Eigenschafts- bzw. Farbübergang zu erreichen, müssen die Schmelzeströme mit jeweils unterschiedlichen chemischen und/oder physikalischen Eigenschaften möglichst gut miteinander vermischt werden. Im erfindungsgemäßen Verfahren werden die Schmelzeströme mit jeweils unterschiedlichen chemischen und/oder physikalischen Eigenschaften in einem oder mehreren statischen oder dynamischen Mischer zusammengeführt und vermischt. Erst die so erhaltene, homogene Mischung wird in das Werkzeug eingespritzt.

Besondere Bedeutung kommt hierbei der Auslegung des statischen Mischelementes (4 in Fig. 4) zu, in dem die Schmelzeströme örtlich homogen vermischt werden. Der Mischer ist dabei so zu bemessen, dass er bei ausreichender Mischwirkung die kürzeste Verweilzeitverteilung aufweist. Beim Zeitpunkt t4 der Fig.6 ist daher die Kavität komplett gefüllt und die Folie kann gekühlt und anschließend entformt werden.

Das erfindungsgemäße Verfahren kann insbesondere zur Herstellung von Dämpfungselementen, Schwimmkörpern, von Frontscheinwerfern, Blinkern oder Heckleuchten im Kfz-Bereich, von lichtleitenden Abdeckungen für die Konsumgüterindustrie z.B. für Autoradios, Stereoanlagen oder TV-Abdeckungen eingesetzt werden.

Mit dem erfindungsgemäßen Verfahren können insbesondere Folien zur Herstellung von Verbundverglasungen hergestellt werden. Die Folien weisen bevorzugt einen Farbübergang von einem transparenten zu einem farbigen Bereich auf. Alternativ oder zusätzlich zum Eigenschafts- oder Farbübergang können die Folien einen keilförmigen Dickenprofil oder Querschnitt besitzen.

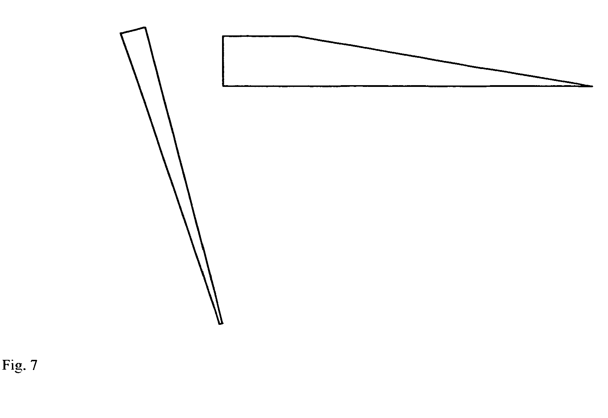

Erfindungsgemäß hergestellte Folien können einen keilförmigen Querschnitt aufweisen, der einen Winkel von 0,1 bis 1 mrad, bevorzugt 0,3 bis 0,7 mrad und insbesondere 0,4 bis 0,6 mrad entspricht. Fig. 7 zeigt mögliche Querschnitte solcher Folien.

Keilförmige Folien finden für die Projektion in "Head-Up Displays" Verwendung und sind z.B. in EP 0 893 726 B1 beschrieben. Bei einer Projektion auf Verbundverglasungen, die aus zwei durch eine PVB-Folie verbundene Gläser bestehen, kommt normalerweise zu störenden Doppelbildern. Verhindert wird dieser negative Effekt dadurch, dass die Folien wenige Bogenminuten keilförmig ausgeführt sind und dann beide Bilder übereinander liegen.

Mittels der erfindungsgemäßen Spritzgießtechnik kann nahezu jeder beliebige Verlauf der Foliendicke erzeugt werden. Das hergestellte Sheet kann in seinen Außenabmessungen der Geometrie der Windschutzscheibe exakt oder ggf. mit einem vordefinierten Überstand angepasst werden.

Im erfindungsgemäßen Verfahren werden thermoplastische Polymerschmelzen für die Herstellung von Folien, Halbzeugen und/oder Fertigteilen eingesetzt. Beispielhaft können die Schmelzeströme jeweils gleich oder unterschiedlich ein oder mehrere Polymere, ausgewählt aus der Gruppe der Polyolefine sowie deren Sondertypen und Blends, Polystyrole und Styrol-Copolymerisate, Polymethylmethacrylat, Polyacrylnitril, Polyvinylacetale, Fluor- und Chlorpolymere, Polyamide, Polycarbonate, Polyethylen- und Polybutylenterephtalate, Polyphenylenoxid, Polysulfon und Abkömmlinge, Polyketone enthalten. Die aus diesen Polymeren bestehenden Schmelzeströme können jeweils gleich oder unterschiedlich und/oder mit Farben oder Additiven sowie mit Füll- und Verstärkungsstoffen oder Weichmachern versetzt sein.

Im erfindungsgemäßen Verfahren, insbesondere bei der Herstellung von Folien zur Verbundglasherstellung können die Schmelzeströme jeweils gleich oder unterschiedlich und/oder mit Farben, Additiven oder Weichmachern versetzt weichmacherhaltiges Polyvinylacetal, weichmacherhaltiger Polyvinylalkohol, weichmacherhaltiges Vinylalkohol/Vinylacetat/Ethylen-Copolymer, weichmacherhaltiges teilacetalisiertes Vinylalkohol/Vinylacetat/Ethylen-Copolymer enthalten.

Als Vinylalkohol/Vinylacetat/Ethylen-Terpolymere können insbesondere EXEVAL oder EVAL der Kuraray Co. (Japan) eingesetzt werden. Als Weichmacher für Polyvinylalkohol und Vinylalkohol/Vinylacetat/Ethylen-Copolymer können z.B. Wasser oder Glycerin eingesetzt werden.

Die Polyvinylacetale bzw. teilacetalisiertes Vinylalkohol/Vinylacetat/Ethylen-Copolymere weisen neben nicht verseiften Acetatgruppen an die Polymerkette (Backbone) gebundene Hydroxylgruppen auf, die ganz oder teilweise mit einem oder mehreren Aldehyden acetalisiert werden. Die Herstellung der erfindungsgemäß eingesetzten Polyvinylacetale ist dem Fachmann bekannt.

Zur Herstellung der Polyvinylacetale der teilacetalisierten Vinylalkohol/Vinylacetat/EthylenCopolymere werden bevorzugt ein oder mehrere Aldehyde mit 1 bis 10 Kohlenstoffatomen wie z.B. Formaldehyd, Acetaldehyd, Propionaldehyd, Butyraldehyd oder Octanal eingesetzt. Besonders bevorzugt ist Butyraldehyd, was zum bekannten Polyvinylbutyral (PVB) führt. Geeignete Polyvinylbutyrale besitzen einen Restvinylalkoholgehalt nach ASTM D 1396 von 16 bis 25 Gew.%, insbesondere 16 bis 20 Gew.% und sind z.B. in WO 03/051974 A1 oder EP 1 412 178 B1 beschrieben. Die erfindungsgemäß verwendeten Massen werden durch Zusatz von geeigneten Weichmachern zu Polyvinylacetalen hergestellt. Alternativ ist auch der Einsatz von intern plastifizierten Polyvinylacetalen d.h. Polyvinylacetale mit geeigneten, kovalent gebundenen Seitenketten möglich.

Es ist auch möglich, mit Dialdehyden oder Aldehyd-Carbonsäuren vernetzte Polyvinylbutyrale zu verwenden. Geeignete Polymere dieser Art sind z.B. in DE 10 143 109 A1 oder WO 02/40578 A1 beschrieben.

Üblicherweise enthalten die erfindungsgemäß verwendeten Schmelzeströme bzw die thermoplastischen Formmassen 10-40 Gew.% eines oder mehrerer Weichmacher.

Als Weichmacher für das Polyvinylacetal können die zur Herstellung von Verbundglaslaminaten bekannten "Standardweichmacher" wie Diethylenglycol-di-2-ethylhexanoat Triethylenglykol-di-2-ethylbutyrat (3GH), Triethylenglykol-di-n-hexanoat (3G6), Triethylenglykol-di-n-heptanoat (3G7), Triethylenglykol-di-2-ethylhexanoat, Triethylenglycoloctanoat, Tetraethylenglycol-di-2-ethylhexanoat (3G8), Dihexyladipat (DAH), Dialkyladipate mit einem Alkylrest mit mehr als 6 Kohlenstoffatomen und Oligoglycolsäureester mit einem Carbonsäurerest mit mehr als 7 Kohlenstoffatomen insbesondere Dioctyladipat (DOA), usw. verwendet werden.

Alleine oder in Mischung mit den Standardweichmachern können auch Weichmacher ausgewählt aus der folgenden Gruppe: Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxyethoxyethyl)-sebacat (DBEES), Di-(2-butoxyethoxyethyl)-azelat, Di-(2-butoxyethoxyethyl)-glutarat, Di-(2-hexoxyethyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat, Di-(2-butoxyethoxyethyl)-phthalat und/oder Cyclohexandicarbonsäurediisononylester (DINCH) verwendet werden.

Erfindungsgemäß hergestellte Folien können weitere, dem Fachmann bekannte Zusätze enthalten wie Restmengen an Wasser, UV-Absorber, Antioxidantien, Haftungsregulatoren (z.B. Kalium- und/oder Magnesiumsalze), optische Aufheller, Stabilisatoren, Farbmittel, Verarbeitungshilfsmittel, und/oder oberflächenaktive Stoffe. Systeme dieser Art sind z.B. in EP 0 185 863 A1, WO 03/097347 A1 oder WO 01/43963 A1 beschrieben.

Die Verarbeitung der erfindungsgemäßen Folien zu Verbundsicherheitsglas kann wie üblich bei der Verbundglasherstellung durch Vakuumsackverfahren oder Vorverbund/Autoklavenprozesse erfolgen. Hierbei wird die Folie zwischen zwei Glasscheiben gelegt und die eingeschlossene Luft durch Anlegen von Vakuum oder externen Druck weitgehend entfernt. Der so erhaltene Vorverbund kann anschließend in einem Autoklaven unter erhöhtem Druck und erhöhter Temperatur zu einem transparenten Verbundglas verpresst werden.

Alternativ sind auch Einstufenprozesse durchführbar, bei denen ein zusammengelegtes Glas/Folienlaminat unter Vakuumeinwirkung verpresst und bei erhöhten Temperaturen (ca. 100 - 150 °C) zu einem transparenten blasenfreien Verbundglas verarbeitet wird.

Zwischenschichtfolien mit gleichmäßigem Dickenprofil werden beim Hersteller der Windschutzscheiben einseitig gereckt, um das Farbband parallel zur Oberkante der in der Regel nicht rechteckigen Windschutzscheibe laufen zu lassen. Durch den Reckvorgang wird das Dickenprofil der Folie ebenfalls verändert, was besonders bei Folien mit keilförmigem Querschnitt einen negativen Einfluss auf das Keilprofil haben kann.

Bei erfindungsgemäß hergestellten Folien mit keilförmigen Dickenprofil oder Querschnitt entfällt der beschriebene Reckvorgang der Folie, da diese Folien bereits die benötigte Form haben. Folien dieser Art sind insbesondere für Head-Up-Display-Anwendungen geeignet.

## Patentansprüche

1. Verfahren zur Herstellung von Formteilen mit mindestens einem kontinuierlichen Übergang von physikalischen und/oder chemischen Eigenschaften durch Spritzgießen einer Mischung von thermoplastischen Polymermassen mit jeweils unterschiedlichen physikalischen und/oder chemischen Eigenschaften durch gegenläufige Veränderung der jeweiligen Anteile der mindestens zwei Schmelzeströme **dadurch gekennzeichnet, dass** die mindestens zwei Schmelzeströme vor der Spritzgußform in einem statischen oder dynamischen Mischer zusammengeführt und vermischt werden.

2. Verfahren nach Anspruch 1, **dadurch gekennzeichnet, dass** die Schmelzeströme jeweils bis auf unterschiedliche Farben, Additive oder Füll- und Verstärkungsstoffe die gleiche Zusammensetzung aufweisen.

3. Verfahren nach einem der Ansprüche 1 oder 2, **dadurch gekennzeichnet, dass** die Schmelzeströme jeweils bis auf unterschiedliche Farben, Additive oder Füll- und Verstärkungsstoffe die gleiche Zusammensetzung aufweisen, wobei mindestens einer der Schmelzeströme farblos ist.

4. Verfahren nach einem der Ansprüche 1 bis 3, **dadurch gekennzeichnet, dass** die Schmelzeströme jeweils gleich oder unterschiedlich ein oder mehrere Polymere ausgewählt aus der Gruppe Polyolefine sowie deren Sondertypen und Blends, Polystyrole und Styrol-Copolymerisate, Polymethylmethacrylat, Polyacrylnitril, Polyvinylacetale, Fluor- und Chlorpolymere, Polyamide, Polycarbonate, Polyethylen- und Polybutylenterephtalate, Polyphenylenoxid, Polysulfon und Abkömmlinge, Polyketone enthalten.

5. Verfahren nach einem der Ansprüche 1 bis 4, **dadurch gekennzeichnet, dass** die Schmelzeströme jeweils gleich oder unterschiedlich und/oder mit unterschiedlichen Farben, Additiven oder Weichmachern versetzt weichmacherhaltiges Polyvinylacetal, weichmacherhaltigen Polyvinylalkohol, weichmacherhaltiges Vinylalkohol/Vinylacetat/EthylenCopolymer, weichmacherhaltiges teilacetalisiertes Vinylalkohol/Vinylacetat/EthylenCopolymer enthalten.

## Claims

1. A method for producing moulded parts with at least one continuous transition of physical and/or chemical properties by injection-moulding a mixture of thermoplastic polymer materials each having different physical and/or chemical properties by modifying the respective proportions of the at least two melt streams in opposite directions, **characterised in that** the at least two melt streams, prior to introduction into an injection mould, are brought together and mixed in a static or dynamic mixer.

2. The method according to Claim 1, **characterised in that** the melt streams each have the same composition, apart from different colours, additives, or fillers and reinforcing materials.

3. The method according to one of Claims 1 or 2, **characterised in that** the melt streams each have the same composition, apart from different colours, additives, or fillers and reinforcing materials, at least one of the melt streams being colourless.

4. The method according to one of Claims 1 to 3, **characterised in that** the melt streams each contain, identically or differently, one or more polymers selected from the group of polyolefins and special types and blends thereof, polystyrenes and styrene copolymers, polymethyl methacrylate, polyacrylonitrile, polyvinyl acetals, fluoropolymers and chloropolymers, polyamides, polycarbonates, polyethylene terephthalates and polybutylene terephthalates, polyphenylene oxide, polysulfone and derivatives thereof, and polyketones.

5. The method according to one of Claims 1 to 4, **characterised in that** the melt streams each contain, identically or differently or mixed with different colours, additives or plasticisers, plasticiser-containing polyvinyl acetal, plasticiser-containing polyvinyl alcohol, plasticiser-containing vinyl alcohol/vinyl acetate/ethylene copolymer, plasticiser-containing partly acetalised vinyl alcohol/vinyl acetate/ethylene copolymer.

## Revendications

1. Procédé de fabrication de pièces moulées, comportant au moins une transition continue de propriétés physiques et/ou chimiques et consistant à réaliser un moulage par injection d'un mélange de masses polymères thermoplastiques dont chacune présente des propriétés physiques et/ou chimiques différentes, en faisant varier dans des sens opposés les proportions des au moins deux flux de matière en fusion, **caractérisé en ce que** les au moins deux flux de matière en fusion sont réunis puis mélangés en amont du moule d'injection dans un mélangeur statique ou dynamique.

2. Procédé selon la revendication 1, **caractérisé en ce que** les flux de matière en fusion présentent la même composition, sauf en ce qui concerne leurs colorants, leurs additifs, ou leurs charges et agents de renforcement.

3. Procédé selon l'une des revendications 1 ou 2, **caractérisé en ce que** les flux de matière en fusion présentent la même composition, sauf en ce qui concerne leurs colorants, leurs additifs, ou leurs charges et agents de renforcement, au moins un des flux de matière en fusion étant incolore.

4. Procédé selon l'une des revendications 1 à 3, **caractérisé en ce que** chacun des flux de matière en fusion contient, d'une manière identique ou différente, un ou plusieurs polymères choisis dans le groupe des polyoléfines et de leurs variétés particulières et mélanges, des polystyrènes et copolymérisats de styrène, polyméthacrylate de méthyle, polyacrylonitrile, des acétals de polyvinyle, des polymères fluorés et chlorés, des polyamides, des polycarbonates, des polytéréphtalates d'éthylène et de butylène, poly(oxyde de phénylène), polysulfone et ses dérivés, des polycétones.

5. Procédé selon l'une des revendications 1 à 4, **caractérisé en ce que** chacun des flux de matière en fusion contient, d'une manière identique ou différente et/ou de manière à présenter différents ajouts de colorants, additifs ou plastifiants, de l'acétal de polyvinyle contenant des plastifiants, de l'alcool polyvinylique contenant des plastifiants, du copolymère d'alcool vinylique / acétate de vinyle / éthylène contenant des plastifiants, du copolymère d'alcool vinylique / acétate de vinyle / éthylène contenant des plastifiants et ayant été partiellement transformé en acétal.
